# EUROPEAN PATENT APPLICATION

(11) **EP 1 348 475 A2**
(43) Date of publication of application: **01.10.2003**
(21) Application number: 03251961.3
(22) Date of filing: 28.03.2003
(51) Int. Cl.: B01D 29/01, B01D 37/04

(54) **Apparatus for filtering raw water such as surface water**

(30) Priority: 28.03.2002 GB 0207378
(71) Applicant: Vexamus Limited, Cambridgeshire PE13 1NE (GB)
(72) Inventor: Ellistone, Kate Nicola, Inverness, IV3 8PW (GB)
(74) Representative: Dummett, Thomas Ian Peter

(57) **Abstract**

The invention provides a fluid collection device for use in a waste fluid collection system in which intermittent excessive flows of fluid into the system occur. The device comprises a collection chamber including one or more inlets and a pump. The chamber also has one or more outlets through which excessive fluid fed to the chamber can be discharged. The device also comprises an overflow separation device in fluid flow communication with the collection chamber. The overflow separation device comprises a separation chamber which incorporates an apertured member, a weir means for retaining a head of fluid within the separation chamber, an inlet to the separation chamber, whereby fluid fed to the separation chamber from the collection chamber is caused to flow upwardly through the apertured member and one or more overflow means whereby excessive fluid fed to the apertured member may bypass the apertured device and discharge from the separation chamber at a level above the weir device.

## Description

The present invention relates to a device, notably one for separating solids from an intermittent excess fluid flow.

### BACKGROUND TO THE INVENTION:

Typically, rain water and other surface water collection and disposal systems incorporate storm water overflow systems. These usually take the form of a collection chamber having a pump located therein, to which chamber is fed raw sewage as well as the surface water. Rain water or other surface water collected by the gutters or other components of the drainage system flows into the collection chamber and is then pumped with the collected sewage to a treatment plant to render the water and sewage suitable for re-use or discharge to the environment. However, where the amount of surface water being collected is excessive, for example during a sudden storm or rain downpour, the pump can no longer maintain the level of water and sewage within the capacity of the chamber. Excess water is then allowed to overflow from the collection chamber and to run to a suitable stream or other waste water location. Since the overflowing water will contain some raw sewage and has not been subjected to treatment, such overflow represents a health hazard. Furthermore, the overflowing excess water will also contain suspended and other solids which present a further hazard to the environment.

It has been proposed to fit a collection bag to the end of the overflow pipe from the collection chamber to trap solids in the excessive water overflow and prevent their discharge into the environment. However, this bag has to be collected and emptied frequently in order to prevent rupturing of the bag or blockage of the overflow pipe. This is dirty and time consuming and represents an additional cost in a system for which all additional costs need to be avoided if possible.

It has also been proposed to provide an overflow trap having an inlet and at least two outlets and to use an apertured screen between the inlet and a first outlet to trap solids from the overflow waste stream. To prevent the apertured screen from blinding and blocking fluid flow to the first outlet mechanisms have been proposed that cause liquid to backwash through the screen when the screen begins to blind. Such a mechanism is shown in WO 97/06872. The mechanism includes a movable gate that is actuated to allow the overflow stream to bypass the apertured screen and direct the overflow waste stream to a second outlet. The gate is actuated when the water level in a chamber on the inlet side of the screen rises above a predetermined maximum level indicating that the screen is becoming blinded. The screen is then backwashed by a head of water maintained above the screen to prevent blinding. GB 2 362 839 shows a similar mechanism, except that in this case the gate is actuated by the overflow of liquid into a float chamber. The float rises as the liquid level in the float chamber rises until a predetermined level at which the gate is rapidly opened and the float chamber emptied. Both mechanisms include moving parts and in the harsh environment of the separator they may become stuck or corroded and will usually require regular maintenance to ensure their correct function. Both of these documents relate primarily to separators designed to be permanently in line and which therefore require regular cleaning to prevent blinding.

We have now devised an overflow device which separates solids from the overflowing water and which automatically returns that to the collection chamber when the excessive surface water flow ceases. The device is self-cleaning and has no moving parts when in use so that maintenance is reduced.

### SUMMARY OF THE INVENTION:

Accordingly, the present invention provides a fluid collection device for use in a waste fluid collection system in which intermittent excessive flows of fluid into the system occur, which device comprises the combination of:
a. a collection chamber having one or more inlets adapted to receive waste fluid and a pump located operatively in association with said chamber, for example located within the chamber at or adjacent the base of the chamber, which pump is adapted to discharge fluid from the chamber, for example to a treatment system for the fluid so as to render it suitable for re-use or for discharge to the environment, the chamber also having one or more outlets through which excessive fluid fed to the chamber can be discharged; and
b. an overflow separation device in fluid flow communication with said collection chamber via one or more of said outlets from the collection chamber and an inlet to a separation chamber of the separation device, said overflow separation device comprising a separation chamber which incorporates:
   i. an apertured member for separating solids from a fluid flow from the collection chamber through the separation chamber,
   ii. a weir means first outlet from the separation chamber for retaining a head of fluid within the separation chamber above the apertured member,
   iii. an inlet to the separation chamber, which inlet is located at a level below that of the apertured member, whereby fluid fed to the separation chamber from the collection chamber is caused to flow through the apertured member,
   iv. one or more overflow means second outlets from the separation chamber whereby excessive fluid fed to the apertured member may bypass the apertured device and discharge from the separation chamber at a level above the weir device;
the apertured member of the separation chamber being located at a level above the fluid outlet from the collection chamber to the separation device whereby fluid is caused to flow from the collection chamber to the separation chamber when the level of fluid within the collection chamber exceeds a predetermined level and is caused to return to the collection chamber from the separation chamber when the level of fluid within the collection chamber falls below that predetermined level, thus causing fluid retained by the weir device of the separation chamber to flow downwardly through the apertured member and thus backwash solids retained on the underside of the apertured member to the collection chamber in the fluid returning to the collection chamber.

The invention further provides an overflow separation device for use in combination with a collection chamber for a fluid collection system, which overflow separation device comprises a separation chamber having:
i. an apertured member for separating solids from a fluid flow through the separation chamber,
ii. a weir means first outlet from the separation chamber for retaining a head of fluid within the separation chamber above the apertured member,
iii. an inlet to the separation chamber, which inlet is located at a level below that of the apertured member, whereby fluid fed to the separation chamber is caused to flow through the apertured member,
iv. one or more overflow means second outlets from the separation chamber whereby excessive fluid fed to the apertured member may bypass the apertured member and discharge from the separation chamber at a level above the weir device to an outlet from the overflow separation device;
the apertured member of the separation chamber being located at a level above the fluid inlet to the overflow separation device.

The invention also provides a method of preventing overfilling of a collection chamber during a temporary excess flow of waste fluid into a fluid collection device as claimed in claim 1, the method comprising the steps of:
a. causing at least some of the excess waste fluid entering the collection chamber during the excess waste fluid flow to flow into the separation chamber and through the apertured member when the water level in the collection chamber reaches a predetermined level such that the apertured member traps solid material entrained with the waste fluid;
b. after the temporary excess waste fluid flow has ceased, using the pump to lower the fluid level in the collection chamber and cause the head of fluid created above the apertured member to backwash the apertured member such that at least some of the trapped solid material is washed back into the collection chamber.

The device of the invention is of especial use in separating solids from an excessive water flow into a collection chamber of a foul water drainage system. However, the invention may also be applied to separation of solids from intermittent excessive flows of other fluids in other operating systems. Thus, the overflow separation device may be used to separate solids from waste fluid streams from a chemical process, for example to separate solids from cooling or process water streams. However, for convenience, the present invention will be described with reference to a pump collection chamber in a municipal surface water and sewage collection system where intermittent excessive flows of storm water into the collection chamber arise during periods of high rainfall.

The collection chamber typically comprises a concrete sump into which sewage and surface water collected by the drainage system flow under gravity and are then pumped to further treatment processes by a pump located in or adjacent the base of the sump. The sump is typically made from cast concrete, for example from pre-cast concrete rings to build up a sump of the desired depth. Alternatively, the sump may be made from plastic and/or metal. The sump can be of any suitable size and shape and the pump is typically an electric submersible pump. If desired, the pump may be located on the outlet from the sump to the further treatment vessels. However, for convenience, the present invention will be described with reference to a generally upright cylindrical collection chamber made from concrete and having the pump located in the basal portion of the chamber or sump.

The collection chamber is designed to operate with fluid therein up to a predetermined safe operating level which is above a normal operating level. The normal operating level is the level at which the pump keeps the fluid during normal operation. The safe operating level is a level below the top of the chamber which fluid should not exceed even during excessive fluid ingress. The chamber is provided with one or more outlet ports in the side wall of the thereof which are in fluid flow communication with the separation chamber of the overflow separation device of the invention. This outlet port is located slightly above, for example 5 to 25 cms above, the normal operating level of the collection chamber during normal sewage and water inflow conditions. Since the water within the collection chamber may carry floating or suspended solids and have a film of grease or oil floating on the surface thereof, it will usually be desired to provide a vertical baffle plate in register with, but spaced radially inwardly from, the outlet port to the overflow separation device so as to minimise surface skimming of those solids, grease and oil into the outlet port. In a particularly preferred embodiment, this baffle is provided by a vertical tube which extends both above and below the level of the port and which in connected to the proximal end of an outlet tube which provides the fluid flow communication with the overflow separation device described below. Typically, this vertical tube forms a dip tube which extends to below the surface of the fluid within the collection chamber during normal operating conditions so as to minimise the amount of solids, grease and oil which flow into the outlet tube. The dip tube extends upwardly beyond the level of the outlet tube to an open upper end so that fluid can flow freely under ambient pressure into and through the outlet tube. Typically the upper open end of the dip tube extends to the maximum safe operating level of water within the collection chamber. The use of a baffle or dip tube reduces the amount of solids which are carried by the overflowing excess fluid to the apertured member of the overflow separation device. This extends the period over which the overflow separation can operate before the apertured member becomes blinded and excess flow is discharged as described. This reduces the environmental effect of excessive flows into a collection chamber.

The outlet tube from the collection chamber provides the fluid communication between the collection chamber and the overflow separation device of the invention. In order to reduce deposition of solids within this tube, it is preferred that it have a fall and diameter such the water flows back into the collection chamber as described below at a rate of from 1 to 1.5 metres per second when the liquid level in the collection chamber drops. The optimum size and fall required to achieve this can readily be determined by simple trial and error tests.

The overflow separation device of the invention comprises a separation chamber into which water from the collection chamber flows when the water level within the collection chamber rises due to excessive inflow of storm water thereinto. The separation chamber is preferably housed within a suitable housing, for example a cylindrical concrete housing which provides the fluid flow paths for discharge of water from the separation chamber. Thus, the overflow separation device typically comprises a cylindrical concrete ring set on a horizontal base and having the separation chamber located within the space within the ring. The overflow separation device further includes an outlet that allows fluid that has passed through the separation chamber to exit the device and pass to the environment or to further processing.

The separation chamber extends upwardly from the base to form an open topped inner housing containing the apertured member as a transverse component within the inner housing. The inner housing is provided with an inlet port connected by a suitable tube to the outlet from the collection chamber. As indicated above, this tube has sufficient fall to allow water draining back to the collection chamber to suspend solids therein and is of such a diameter that it causes little or no restriction on the free flow of water to and from the collection chamber.

The apertured member can take a variety of forms according to the type and size of solids which are to be separated from water flowing through the separation chamber and the flow rate of that fluid. Thus, the apertured member can take the form of a reticulate woven fabric, metal screen or mesh having uniformly configured and located apertures therethrough, for example square or polygonal apertures of size from 3 to 10 mms, notably about 6 mms. Alternatively, the member can have irregular apertures randomly located therein, as with a ceramic frit, a screwed up mesh or other screen. If desired, the apertured member can have reinforcing members, for example a metal grid, incorporated therein and/or can be mounted in a supporting frame. Such a frame can serve to subdivide the total area of the apertured member into individual units for ease of repair or maintenance. The apertured member(s) may be formed with a corrugated form to impart greater rigidity thereto and to increase the total screen area of the member within a given plane area. If desired, two or more apertured members may be used to form a series of members of decreasing aperture size with plenum chambers between each member, which may serve to generate turbulence in the flow of water between each member which may assist reduction of blinding of the apertures of the members. Alternatively, the apertures through the members may be formed with a convergent transverse cross section to reduce blinding of the apertures. In an alternative form of apertured member, two or more layers of strands, for example stainless steel wires, may be superimposed upon one another each layer of strands being orientated at an angle, typically 60 to 90°, with respect to the strands in adjacent layers so as to form a reticulate structure in which the strands may move relative to one another to assist dislodgement of solids from the reticulate structure.

For convenience, the invention will be described hereinafter in terms of a reticulate stainless steel mesh having an aperture size of 6 mms in two mutually perpendicular directions. Such screens are commercially available as 6 mm 2D screens.

As indicated above, the apertured member is orientated transversely to the flow of water through the separation chamber. Preferably, the member is orientated generally horizontally, with the inlet from the collection chamber located below the member and at or adjacent the base of the separation chamber. Preferably the base of the chamber is sloped upwardly away from the inlet to assist flow of fluid onto the apertured member and the carriage of solids away from the apertured member when fluid flows back to the collection chamber as described below. However, its is within the scope of the present invention for the apertured member to be orientated vertically within the separation chamber, or at any angle intermediate horizontal and vertical, provided that a head of fluid can be maintained on the outlet side of the apertured member whilst fluid flows from the collection chamber. In this way solids are trapped on the face of the inlet side of the apertured member and can be removed and returned to the collection chamber when fluid flows from the separation chamber back to the collection chamber. Thus, for example, the apertured member could be mounted vertically across a horizontal portion of the separation chamber which then curves upwardly and is provided with the weir member described below. For convenience, the invention will be described hereinafter in terms of the generally vertical separation chamber having a transverse apertured member mounted generally horizontally across the chamber intermediate the upper and lower ends thereof.

The separation chamber is provided with a weir means first outlet for retaining a head of fluid above the apertured member on the outlet side during the flow of water through the separation chamber from the collection chamber. This means typically takes the form of the upward extension of the walls of the separation chamber beyond the level of the location of the apertured member to provide a weir member which retains a substantially constant level of water over the apertured member. Preferably, this depth of water is a least 10 cms and preferably 25 cms or more. The weir means first outlet from the separation chamber is the normal outlet from the separation chamber for fluid fed to the separation chamber. Fluid leaving the separation chamber from this first outlet passes to one or more outlets from the overflow separation device at a level below the weir means. The fluid leaving the outlet from the overflow separation device may be passed to the environment or to further treatment devices.

The overflow separation device is also provided with overflow means second outlets from the separation chamber which are preferably in direct communication with the inlet to the separation chamber so that, if the flow of water into the separation chamber becomes excessive, the flow can bypass the apertured device and escape via the overflow means to an outlet before damage is caused to the apertured device. The overflow means discharge liquid at a level above that of the weir device so that an additional head of liquid is required before unfiltered liquid is passed to the outlet. As the apertured member begins to blind, the liquid level in the overflow means will rise as the pressure on the inlet side of the apertured member increases. The additional liquid head required to cause water to flow from the overflow means forces more liquid through the partially blinded screen before any unfiltered overflow of fluid occurs from the overflow means. Such a further overflow means can take the form of a second weir having a sill level above that retaining the head of water over the apertured member. This sill level may be adjustable to accommodate different operating conditions. These second outlets are used only in cases of excess flow, or blinding of the apertured member. Fluid passing from the separation chamber via the second outlets passes to the outlet from the overflow separation device though the one or more outlets mentioned above.

As indicated above, the apertured member is located at a level above the level of the outlet port from the collection vessel so that water flows to the separation chamber and through the apertured member only when the water level in the collection chamber exceeds a predetermined level. For example the apertured member can be located at from 10 to 30 cms below the maximum safe operating water level of the collection chamber. Thus, when the water level within the collection chamber rises, for example during a rain downpour, water will enter the outlet port of that chamber and flow through the connecting pipe to the inlet of the separation chamber. As the water level in the collection chamber rises further, water will flow into the separation chamber and through the apertured member to raise the water level within the separation chamber to that set by the weir device. Water will then flow over the weir device and out of the overflow separation device by an outlet to the annular or other space between the wall of the separation chamber and the housing of the overflow separation device. The apertured member will trap solids carried in the water flowing through the separation chamber on the face of the inlet side of the apertured member.

However, once the temporary overflow of the excessive water into the collection chamber reduces or ceases, the level of the water in the collection chamber will drop. Once this level drops below that of the top of the weir device in the separation chamber, water will begin to flow back from the separation chamber to the collection chamber. This reverse flow of water will lift the solids from the face of the inlet side of the apertured member and carry them back to the collection chamber via the pipe connecting the separation chamber to the collection chamber. In this way the apertured member becomes self-cleaning, and the solids are returned to the collection chamber from which they are pumped to the treatment vessel(s) downstream of the collection chamber and are not discharged to the environment during the overflow conditions of the collection chamber. The optimum dimensions of the ports, tubes, chambers, apertured member and the relative differences in levels between the ports, the apertured member and the weir device in the separation chamber can readily be established by simple trial and error tests.

### DESCRIPTION OF THE DRAWINGS:

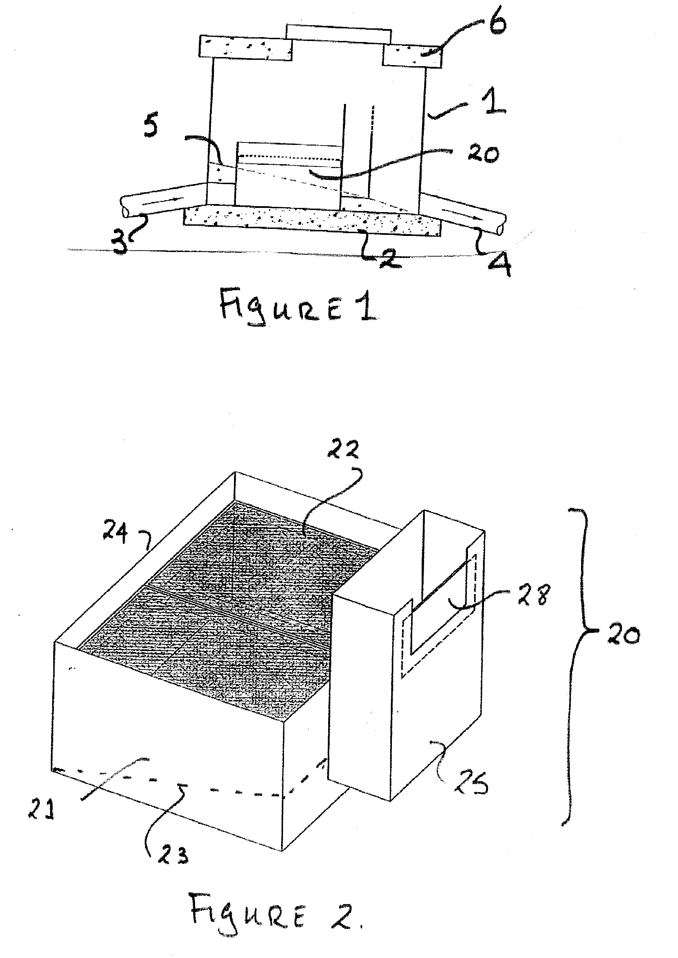

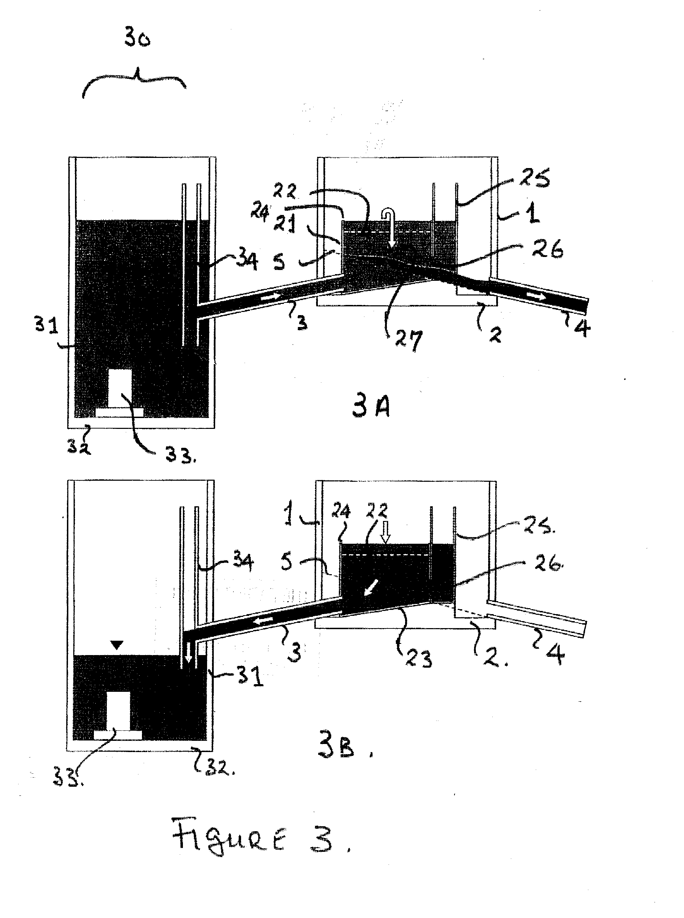

The invention will now be described with reference to a preferred embodiment shown in the accompanying drawings in which Figure 1 is a diagrammatic vertical cross section through an overflow separation device of the invention; Figure 2 is an enlarged view of the separation chamber of the device of Figure 1; and Figure 3 is a diagrammatic representation of the combination of the collection chamber and separation chamber of the invention in use, in Figure 3a with the device operating in the overflow condition, and in Figure 3b with the flow of water returning from the overflow separation device to the collection chamber.

### DESCRIPTION OF THE PREFERRED EMBODIEMENT:

As shown in Figure 1, the overflow separation device comprises a cylindrical concrete housing 1 set onto a horizontal concrete base 2. Housing 1 has an inlet port served by an inlet pipe 3 from a collection chamber 30 shown in Figure 3. The inlet pipe 3 has a diameter and fall sufficient to achieve a flow of from 1 to 1.5 metres per second when the system shown in Figure 3 operates in the backwash mode - Figure 3b. The housing 1 also has an outlet port and pipe 4 to discharge overflow water to waste, for example into a soak-away, lake, river or stream. The base 2 is provided with cement benching 5 to assist flow of liquid to the outlet port and pipe 4. A removable cover 6 is provided to protect the separation chamber described below and allow for servicing of the apertured member within the separation chamber.

Set into the benching 5 is a separation chamber 20 shown in greater detail in Figure 2. As shown in Figure 2, the separation chamber comprises a housing 21 which acts to support the apertured member 22. In this case, the apertured member is shown as two modular frames carrying stainless steel mesh screens of 6 mms 2D aperture size (22). The housing 21 has a sloping base 23 - shown in Figure 3, to assist flow of water from the inlet pipe 3 to the under side of screens 22. The screens 22 are removeably mounted, for example by bolting, to inwardly directed ledges or flanges (not shown) carried by housing 21. The side walls of housing 21 extend upwardly beyond the level of the screens 22 for 10 to 25 cms or more to form the weir 24 which retains a head of water above the screens as shown in Figure 3a. Housing 20 is also provided with an emergency weir device 25 which is in fluid flow communication via port 26 in the wall of the housing 21 with the space 27 below the screens 22 so that if screens 22 become blinded or the inflow of water from collection chamber 30 becomes greater than can be handled by the separation chamber 20. The level of the weir 25 can be set by the adjustable panel 28 so that the level at which water overflows panel 28 corresponds to the maximum safe operating level within the collection chamber 30. Typically this will be from 10 to 30 cms above the level of weir 24, which is itself 10 to 25 cms above the level of screens 22.

The overflow separation device of Figure 1 is used in combination with a collection chamber of a conventional sewage and storm water system as shown in Figures 3. The collection chamber 30 typically comprises a generally cylindrical concrete housing 31 on a concrete base 32. A pump 33 acts to pump the contents of the collection chamber 30 to a treatment vessel (not shown). Housing 31 has an outlet port to which is connected pipe 3 connecting the collection chamber to the separation chamber described above. This outlet port is typically located at or from 5 to 15 cms above the level of water in the collection chamber under normal operating conditions. In order to minimise the ingress of solids and grease floating on the surface of the water in the collection chamber, pipe 3 extends into the collection chamber as shown and is connected to an open topped dip tube 34. This extends downwardly to below the normal level of the water in the collection chamber and upwardly to the maximum safe operating level of water within the collection chamber. As will be seen, the screen 22 is located at a level above the normal water level in the collection chamber and below, typically 20 to 60 cms below, the maximum safe operating water level in the collecting chamber.

As shown in Figure 3a, when the water level in the collecting chamber rises, water flows through pipe 3, upwards through screen 22, over weir 24 and out through outlet pipe 4. Solids in the water are trapped on the under side of screen 22. However, when the water level in the collection chamber falls to below the level of the screen 22, water flows under the head formed by weir 24 back through the screen 22. This washes solids held on the under side of the screen away from the screen and carries them back to the collection chamber. This back washing occurs each time the water level in the collection chamber rises and falls, thus repeatedly back washing the screen and reducing the risk of the screen blinding, thus reducing the need for servicing the screen. The solids are prevented from escaping through outlet tube 4 and are pumped from the collection chamber to the downstream treatment vessels.

The separator is used infrequently as an overflow from the main pump well. For this reason it is expected that the level in the separator would regularly rise and fall causing backwashing through the apertured member. The overflow means from the overflow separator device would only be used in cases of extreme peak flow.

## Claims

1. A fluid collection device for use in a waste fluid collection system in which intermittent excessive flows of fluid into the system occur, which device comprises the combination of:
c. a collection chamber having one or more inlets adapted to receive waste fluid and a pump located operatively in association with said chamber, for example located within the chamber at or adjacent the base of the chamber, which pump is adapted to discharge fluid from the chamber, for example to a treatment system for the fluid so as to render it suitable for re-use or for discharge to the environment, the chamber also having one or more outlets through which excessive fluid fed to the chamber can be discharged; and
d. an overflow separation device in fluid flow communication with said collection chamber via one or more of said outlets from the collection chamber and an inlet to a separation chamber of the separation device, said overflow separation device comprising a separation chamber which incorporates:
i. an apertured member for separating solids from a fluid flow from the collection chamber through the separation chamber,
ii. a weir means first outlet from the separation chamber for retaining a head of fluid within the separation chamber above the apertured member,
iii. an inlet to the separation chamber, which inlet is located at a level below that of the apertured member, whereby fluid fed to the separation chamber from the collection chamber is caused to flow through the apertured member,
iv. one or more overflow means second outlets from the separation chamber whereby excessive fluid fed to the apertured member may bypass the apertured device and discharge from the separation chamber at a level above the weir device;
the apertured member of the separation chamber being located at a level above the fluid outlet from the collection chamber to the separation device whereby fluid is caused to flow from the collection chamber to the separation chamber when the level of fluid within the collection chamber exceeds a predetermined level and is caused to return to the collection chamber from the separation chamber when the level of fluid within the collection chamber falls below that predetermined level, thus causing fluid retained by the weir device of the separation chamber to flow downwardly through the apertured member and thus backwash solids retained on the underside of the apertured member to the collection chamber in the fluid returning to the collection chamber.

2. An overflow separation device for use in combination with a collection chamber for a fluid collection system, which overflow separation device comprises a separation chamber having:
v. an apertured member for separating solids from a fluid flow through the separation chamber,
vi. a weir means first outlet from the separation chamber for retaining a head of fluid within the separation chamber above the apertured member,
vii. an inlet to the separation chamber, which inlet is located at a level below that of the apertured member, whereby fluid fed to the separation chamber is caused to flow through the apertured member,
viii. one or more overflow means second outlets from the separation chamber whereby excessive fluid fed to the apertured member may bypass the apertured member and discharge from the separation chamber at a level above the weir device to an outlet from the overflow separation device;
the apertured member of the separation chamber being located at a level above the fluid inlet to the overflow separation device.

3. A device as claimed in claim 1 or claim 2, in which the apertured member of the overflow separation device has apertures of a size between about 3mm and 10mm.

4. A device as claimed in any preceding claim, in which the overflow separation device comprises two or more apertured members in series with a plenum chamber between each member.

5. A device as claimed in claim 4, in which the aperture size of apertured members decreases in the direction of fluid flow from inlet to outlet.

6. A device as claimed in any preceding claim in which the overflow separation device comprises an apertured member having an aperture size of 6mm in two mutually perpendicular directions.

7. A device as claimed in any preceding claim, in which the weir means comprise upward extensions of the walls of the separation chamber to form a sill above the level of the location of the apertured member.

8. A device as claimed in claim 7, in which the upward extension is at least 10cm.

9. A device as claimed in claim 7, in which the upward extension is at least 25cm.

10. A device as claimed in any preceding claim, in which the overflow means comprises an overflow weir with a sill height greater than the height of the sill of the weir means.

11. A device as claimed in claim 10, in which the sill height of the overflow weir is adjustable.

12. A method of preventing overfilling of a collection chamber during a temporary excess flow of waste fluid into a fluid collection device as claimed in claim 1, the method comprising the steps of:
a. causing at least some of the excess waste fluid entering the collection chamber during the excess waste fluid flow to flow into the separation chamber and through the apertured member when the water level in the collection chamber reaches a predetermined level such that the apertured member traps solid material entrained with the waste fluid;
b. after the temporary excess waste fluid flow has ceased, using the pump to lower the fluid level in the collection chamber and cause the head of fluid created above the apertured member to backwash the apertured member such that at least some of the trapped solid material is washed back into the collection chamber.

13. A method as claimed in claim 12, in which entry of floating solids in the collection chamber into the outlet from the collection chamber that leads to the separation chamber is impeded by a baffle.

14. A method as claimed in claim 13, in which the baffle is in the form of a dip tube extending downwardly from the outlet of the collection chamber to below the fluid level in the collection chamber.

15. A method as claimed in any of claims 11 to 13, in which the method further includes the step of causing at least some excess fluid entering the overflow separation device to bypass the apertured screen and pass out through the overflow means when the apertured screen becomes at least partially blinded.
